# EUROPEAN PATENT APPLICATION

(11) **EP 3 176 856 A1**
(43) Date of publication of application: **07.06.2017**
(21) Application number: 16175679.6
(22) Date of filing: 22.06.2016
(51) Int. Cl.: H01M 2/20, H01M 2/34, H01M 10/48, H02J 7/00, H01M 10/42

(54) **STORAGE BATTERY SYSTEM, STORAGE BATTERY UNIT, AND COMPUTER PROGRAM PRODUCT**

(30) Priority: 04.12.2015 JP 2015238077
(71) Applicant: Kabushiki Kaisha Toshiba, Tokyo 105-8001 (JP)
(72) Inventor: Suda, Shintaro, Tokyo, 105-8001 (JP); Matsushita, Hiroki, Tokyo, 105-8001 (JP)
(74) Representative: Hoffmann Eitle

(57) **Abstract**

According to one embodiment, a storage battery system has a plurality of storage battery units, and a controller. The storage battery units connect in parallel to each other, each of the storage battery units. The storage battery units have a storage battery module, a detector, and a contactor. The detector configures to detect a voltage applied across the storage battery module. The contactor connects between the storage battery module and another storage battery module that is included in another storage battery unit of the plurality of storage battery units. The controller configured to control conductivity of the contactor, the controller configured to determine whether there is a difference, which exceeds a threshold, between a first voltage applied across the storage battery unit to which the contactor is connected and a second voltage applied across the other storage battery unit to which the contactor is connected. The controller configures to place the contactor into a non-conductive state in a case that the controller determined that the difference exceeds the threshold. The controller configures to place the contactor into a conductive state in another case that the controller determined that the difference does not exceed the threshold.

## Description

### FIELD

Embodiments described herein relate generally to a storage battery system, a storage battery unit, and a computer program product.

### BACKGROUND

In the related art, a storage battery system includes a plurality of storage battery units which are connected in parallel to each other. The storage battery system is designed to allow a new storage battery unit to be connected to the existent storage battery units. A larger inrush current is caused by a larger difference between voltage applied across the new storage battery unit and voltage applied across the existent storage battery unit. To reduce or suppress the inrush current, it will be effective to reduce the voltage difference. In the related art, a series circuit is used to reduce the inrush current, wherein a switch and a pre-charge resistance for current suppression are connected in series to each other. Alternatively, a charge device is used to suppress the inrush current, wherein the charge device is designed to adjust the voltage applied across the new storage battery unit. The above-mentioned countermeasures for reducing or suppressing the inrush current can cause increase in the costs of the storage battery system and increase in the total weight of the storage battery system.

### BRIEF DESCRIPTION OF THE DRAWINGS

FIG. 1 illustrates a block diagram of one example of a storage battery system 1 according to one embodiment;
FIG. 2 illustrates a block diagram of one example of a plurality of storage battery units 12 according to the embodiment;
FIG. 3 illustrates a diagram of one example of a current detector 124 according to the embodiment;
FIG. 4 illustrates a flow chart illustrating a processing procedure of a BMU 130 in the storage battery system 1 according to the embodiment;
FIG. 5 illustrates a diagram for explaining one example of the timing at which a contactor 122 is turned on in the storage battery system 1 according to the embodiment;
FIG. 6 illustrates a diagram for explaining another example of the timing at which the contactor 122 is turned on in the storage battery system 1 according to the embodiment; and
FIG. 7 illustrates a diagram for explaining a further example of the timing at which the contactor 122 is turned on in the storage battery system 1 according to the embodiment.

### DETAILED DESCRIPTION

According to one embodiment, a storage battery system has a plurality of storage battery units, and a controller. The storage battery units connect in parallel to each other, each of the storage battery units. The storage battery units have a storage battery module, a detector, and a contactor. The detector configures to detect a voltage applied across the storage battery module. The contactor connects between the storage battery module and another storage battery module that is included in another storage battery unit of the plurality of storage battery units. The controller configured to control conductivity of the contactor, the controller configured to determine whether there is a difference, which exceeds a threshold, between a first voltage applied across the storage battery unit to which the contactor is connected and a second voltage applied across the other storage battery unit to which the contactor is connected. The controller configures to place the contactor into a non-conductive state in a case that the controller determined that the difference exceeds the threshold. The controller configures to place the contactor into a conductive state in another case that the controller determined that the difference does not exceed the threshold.

Below, explanations of a storage battery system, a storage battery unit, and a computer program product according to the present embodiments will be given with reference to the drawings.

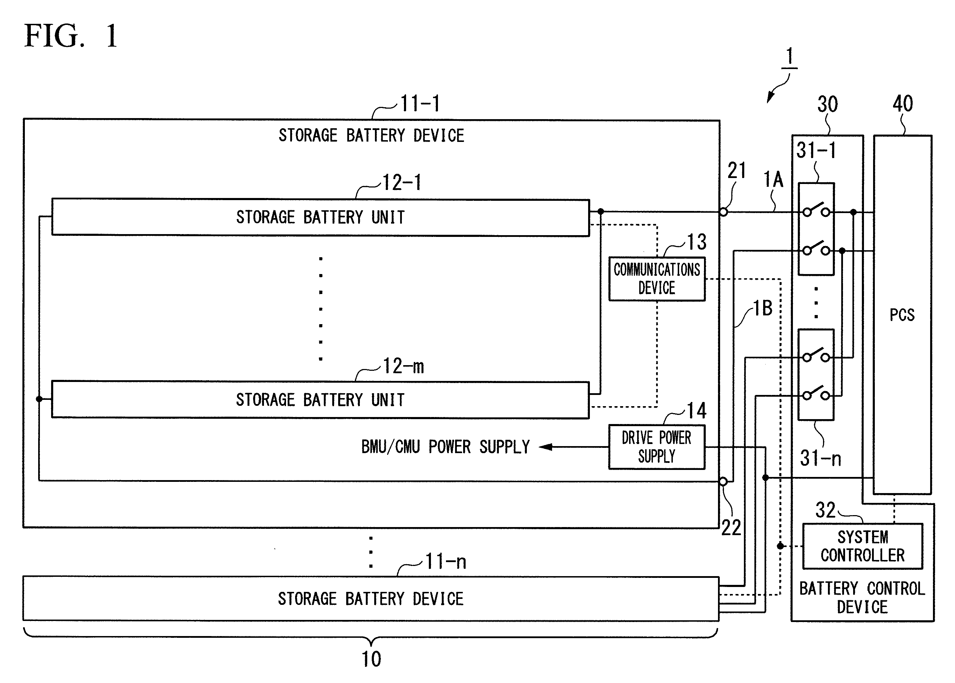

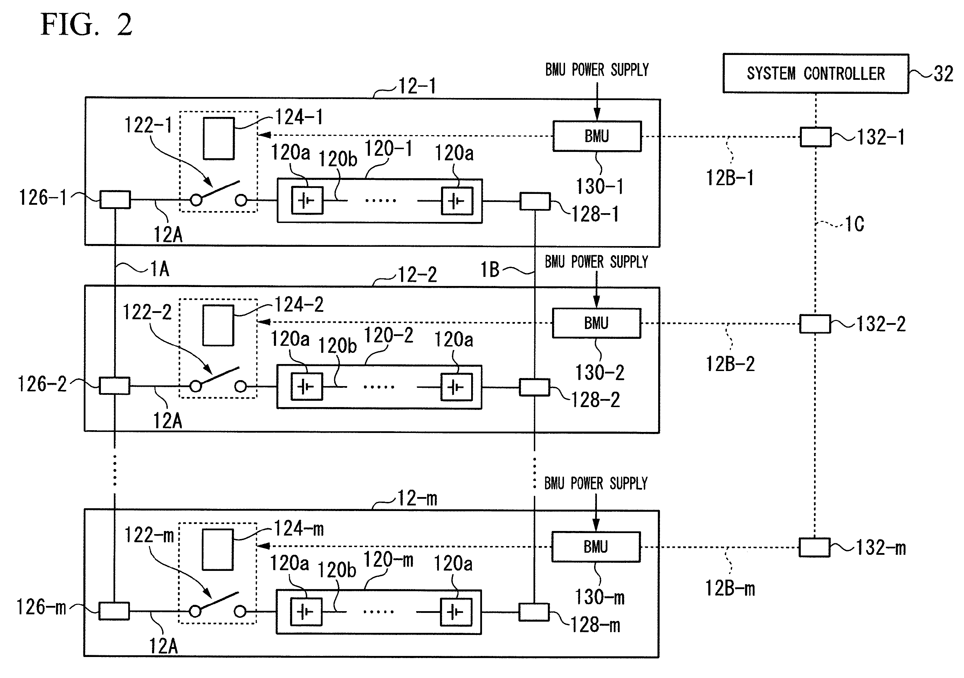

FIG. 1 is a block diagram illustrating one example of a storage battery system 1 according to one embodiment. FIG. 2 is a block diagram illustrating one example of a plurality of storage battery units 12 according to the embodiment. In FIGS. 1 and 2, a power line is shown in in a solid line, while a communications line is shown in a broken line.

The storage battery system 1 may include, but is not limited to, a power storage apparatus 10, a battery control device 30, and a PCS (Power Conditioning System) 40. The power storage apparatus 10 includes a plurality of storage battery devices 11-1 to 11-n, where n is an arbitrary natural number. In an example, the power storage apparatus 10 includes sixteen storage battery devices 11-1 to 11-16. The storage battery devices 11-1 to 11-n have the same internal configuration. The storage battery devices 11-1 to 11-n will be collectively referred to as "storage battery devices 11". The storage battery devices 11-1 to 11-n are connected in parallel to the battery control device 30.

The storage battery device 11 may include, but is not limited to, a plurality of storage battery units 12-1 to 12-m, a communicator 13, a drive power supply 14 and first and second charge-discharge terminals 21 and 22.. "m" is an arbitrary natural number which is at least one. The storage battery units 12-1 to 12-m have the same internal configuration. The storage battery units 12-1 to 12-m will be collectively referred to as "storage battery unit 12".

The plurality of storage battery units 12 are inter-connected in parallel between high and low voltage lines 1A and 1B. In other cases, one of the high and low voltage lines 1A and 1B may be designed to be a ground line. The storage battery unit 12 is connected between the first charge-discharge terminal 21 and the second charge-discharge terminal 22. The first charge-discharge terminal 21 is connected to the high voltage line 1A. The first charge-discharge terminal 21 is connected to the high voltage side of the storage battery unit 12 and to the high voltage line 1A. The high voltage line 1A is connected to the battery control device 30. The second charge-discharge terminal 22 is connected to the low voltage line 1B. The second charge-discharge terminal 22 is connected to the low voltage side of the storage battery unit 12 and to the low voltage line 1B. The low voltage line 1B is connected to the battery control device 30.

The communicator 13 may be, but is not limited to, a communication circuit connected to multiplex communication lines such as a CAN (Control Area Network). The communicator 13 is connected to the plurality of storage battery units 12. The communicator 13 is configured to transmit, to the battery control device 30, information transmitted by the plurality of storage battery units 12. The communicator 13 is configured to transmit information transmitted by the battery control device 30 to one or more of the plurality of storage battery units 12.. The communicator 13 is designed to allow each of the plurality of storage battery units 12 to get attached to or detached from the communicator 13. Each of the plurality of storage battery units 12 is configured to get attached to or detached from the communicator 13.

The battery control device 30 may include, but is not limited to, a plurality of circuit breakers 31-1, ..., 31-n and a system controller 32. In other cases than that described above, the communicator 13 can be optional. For example, the system controller 32 can be connected directly to the plurality of storage battery units 12, while the communicator 13 is not provided in the system 1.

The drive power supply 14 can be implemented by, but not limited to, a voltage conversion circuit. The drive power supply 14 is connected to the PCS 40. The drive power supply 14 converts the voltage of power supplied from the PCS 40 to a voltage for driving BMU/CMU to supply the converted voltage to the plurality of storage battery units 12. The drive power supply 14 is designed to allow each of the plurality of storage battery units 12 to get attached to or detached from the drive power supply 14. Each of the plurality of storage battery units 12 is configured to get attached to or detached from the drive power supply 14.

The battery control device 30 may include, but is not limited to, the circuit breakers 31-1, ..., 31-n, and the system controller 32. The circuit breaker 31 can be implemented by a power switch circuit. The plurality of circuit breakers 31 are provided in correspondence with the plurality of storage battery devices 11. The circuit breaker 31 includes a pair of switches which is connected to the pair of the first and second charge-discharge terminals 21 and 22. In the circuit breaker 31, each of the paired switches can be configured to operate manually or under the control of the system controller 32. The paired switches are used to selectively apply direct current voltage applied across each of the plurality of the storage battery units 12. The circuit breakers 31-1, ..., 31-n may have the same circuit configurations, which will be collectively referred to as "circuit breaker 31".

The system controller 32 may be realized by hardware processor such as a CPU (central processing unit) and a software program, wherein the hardware processor executes to the software program to have the system controller 32 perform control operations. A part or the whole of the system controller 32 may be realized by a variety of hardware resources such as LSIs (large scale integration), ASICs (application-specific integrated circuit), or FPGAs (field-programmable gate array). The system controller 32 is connected to the storage battery unit 12via the communicator 13. The system controller 32 controls the storage battery unit 12 to control the charge-discharge operations of the storage battery unit 12.

The PCS 40 may include, but is not limited to, hardware processor such as a CPU and a software program, and a communication interface. The communications interface is for allowing the PCS 40 to communicate with the outside of the system 1. The PCS 40 converts a direct current voltage supplied from the power storage apparatus 10 to an alternating current voltage. Moreover, the PCS 40 converts an alternating current voltage supplied from a power generation device to a direct current voltage and charges the storage battery unit 12 of the power storage apparatus 10 with the converted voltage. The alternating current voltage generated by the PCS 40 may be raised by a transformer.

As shown in FIG. 2, a storage battery unit 12-1,..., 12-m may include, but is not limited to, a storage battery module 120-1, ..., 120-m; a contactor 122-1,..., 122-m; a current detector 124-1,..., 124-m; a high-voltage side connector 126-1, ..., 126-m; a low-voltage side connector 128-1,..., 128-m; and a BMU 130-1,...,130-m. The storage battery units 12-1 to 12-m have the same internal configuration. The storage battery units 12-1 to 12-m will be collectively referred to as "storage battery unit 12". The storage battery modules 120-1 to 120-m have the same internal configuration. The storage battery modules 120-1 to 12-m will be collectively referred to as "storage battery module 120". The contactors 122-1 to 122-m have the same configuration. The contactors 122-1 to 122-m will be collectively referred to as "contactor 122". The current detectors 124-1 to 124-m have the same internal configuration. The current detectors 124-1 to 124-m will be collectively referred to as "current detector 124". The high-voltage side connectors 126-1 to 126-m have the same configuration. The high-voltage side connectors 126-1 to 126-m will be collectively referred to as "high-voltage side connector 126". The low-voltage side connectors 128-1 to 128-m have the same configuration. The low-voltage side connectors 128-1 to 128-m will be collectively referred to as "low-voltage side connector 128". The BMUs 130-1 to 130-m have the same internal configuration. The BMUs 130-1 to 130-m will be collectively referred to as "BMU 130".

The storage battery unit 12 is connected as a new storage battery unit 12 to an existing storage battery unit 12 by an operator. In other words, the storage battery unit 12 is connected the storage battery unit 12 to another storage battery unit 12 by an operator. "The existing storage battery unit 12" is a battery module in which the high-voltage side connector 126 is already connected to the high voltage line I A and the low-voltage side connector 128 is connected to the low voltage line 1B. "The new storage battery unit 12" is a storage battery unit in which each of the high-voltage side connector 126 and the low-voltage side connector 128 of the storage battery unit 12 is connected to the high voltage line 1A and the low voltage line 1B by an operator while each of the high-voltage side connector 126 and the low-voltage side connector 128 of the storage battery unit 12 is not connected to the high voltage line 1A and the low voltage line 1B. The new storage battery unit 12 may describe a "newly-established storage battery unit 12". The existing storage battery unit 12 may describe an "already-established storage battery unit 12".

The storage battery module 120 may include, but is not limited to, a plurality of storage battery cells 120a which are serially connected by a power line 120b. The storage battery cell 120a (secondary battery cell) is, but is not limited to, a lithium-ion battery. In the storage battery module 120, the plurality of serially-connected storage battery cells 120a may be mutually connected in parallel. Moreover, the storage battery module 120 may include a battery monitoring unit (CMU: cell monitoring unit) which monitors the state such as the temperature or the voltage of the storage battery cell 120a.

The contactor 122 is a power switch. One side of the contactor 122 is connected to the power line 120b of the storage battery module 120. The other side of the contactor 122 is connected to a power line 12A. The contactor 122 operates in accordance with a control signal transmitted by the BMU 130 to switch between the on state (conductive state) and the off state (non-conductive state). The on state of the contactor 122 is the state in which the storage battery module 120 and the high voltage line 1A are electrically conducted. The off state of the contactor 122 is the state in which the storage battery module 120 and the high voltage line 1A are electrically shunted. To the one end of the contactor 122 is connected the high-voltage side connector 126, which is connected to the high voltage line 1A.

The high-voltage side connector 126 is a connector which electrically connects the high voltage line 1A and the storage battery unit 12. The high-voltage side connector 126 is connected to the high voltage line 1A by the operator at the time of getting attached the storage battery unit 12 and releasing the connection from the high voltage line 1A by the operator at the time of getting detached the storage battery unit 12.

The low-voltage side connection device 128 is a connector which electrically connects the low voltage line 1B and the storage battery unit 12. The low-voltage side connector 128 is connected to the low voltage line 1B by the operator at the time of getting attached the storage battery unit 12 and has the connection released from the low voltage line 1B by the operator at the time of getting detached the storage battery unit 12.

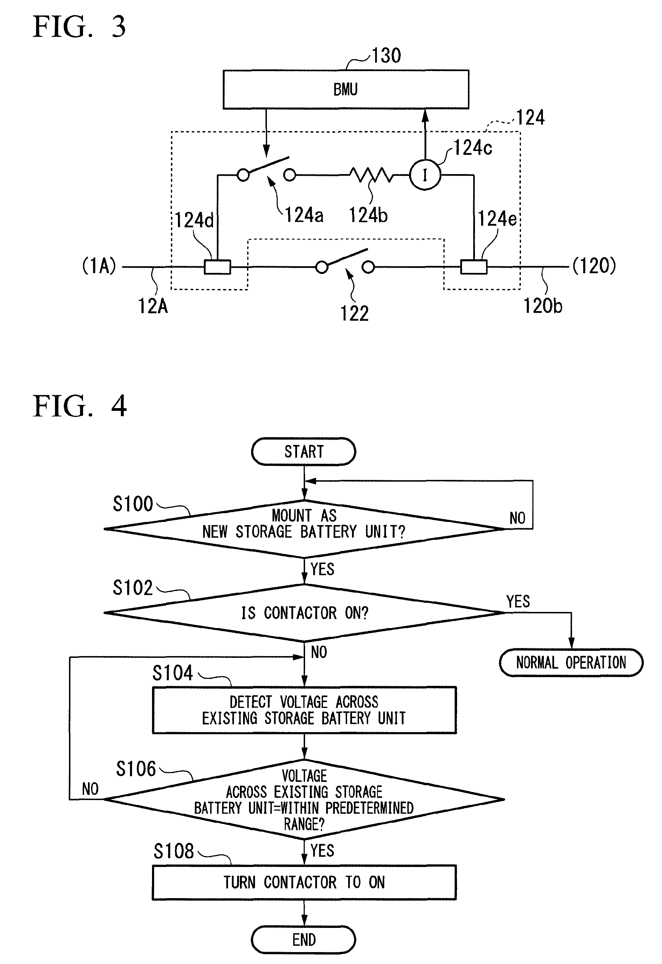

FIG. 3 is a diagram illustrating one example of the current detector 124 according to an embodiment. The current detector 124 may include, but is not limited to, a switch device 124a, a resistive body 124b, and a current meter 124c. The switch device 124a, the resistive body 124b, and the current meter 124c are mutually connected in series. The series circuit of the switch 124a, the resistive body 124b, and the current meter 124c is connected in parallel with the contactor 122. Moreover, the series circuit of the switch device 124a, the resistive body 124a, and the current meter 124c has one end connected to with a first connection device 124d and has the other end connected to a second connection device 124e. The current meter 124c is included, but is not limited to, in the embodiment, so that it may be a voltage meter which is connected in parallel with the resistive body 124b.

The switch device 124a is a power switch. The switch device 124a operates in accordance with the control signal transmitted by the BMU 130 to switch between the on state and the off state. The on state of the switch device 124a is the state in which the high voltage line 1A, the resistive body 124b, and the current meter 124c are electrically conducted. The off state of the switch device 124a is the state in which the high voltage line 1A, and the resistive body 124b and the current meter 124c are electrically shunted.

When the operation of the switch 124a causes conduction between the resistive body 124b and the high voltage line 1A, a current flows through the resistive body 124b based on the difference between the voltage applied across the existing storage battery unit 12 and the voltage applied across the storage battery module 120. While the switch 124a is turned on, the resistive body 124b has a value based on the voltage applied across the existing storage battery unit 12 set to a resistance value such that a current of a detectable level flows across the resistive body 124b. It is desired that the resistive body 124b be of a resistance value which is large enough such that an inrush current which is greater than a limit value set in advance in the storage battery system 1 does not flow into the resistive body 124b itself from the existing storage battery unit 12 when the switch device 124a is turned on.

The current meter 124c measures the current value of the current which flows into the resistive body 124b when the switch device 124a causes conduction with the high voltage line 1A. The current meter 124c transmits a measured current value to the BMU 130.

While the first connector 124d and the second connector 124e may be connected, on a fixed basis, to the power line 12A which connects the high voltage line 1A and the storage battery module 120, it is not connected thereto. The first connector 124d and the second connector 124e may get attached to the power line 12A which connects the high voltage line 1A and the storage battery module 120 when the storage battery unit 12 is getting attached to the high voltage line 1A and the low voltage line 1B as the new storage battery unit 12.

The BMU 130 is realized by a processor such as a CPU, etc., for example, executing programs stored in a program memory. Moreover, some or all of the BMU 130 may be realized by the hardware such as LSI, ASIC, FPGA, etc. The BMU 130 determines that the new storage battery unit 12, including the contactor 122 and the storage battery module 120, be got attached in parallel with the existing storage battery unit 12 between the high voltage line 1A and the low voltage line 1B. When it is determined that the BMU 130 be got attached to the existing storage battery unit 12 as the new storage battery unit 12, the BMU 130 determines whether the voltage applied across the existing storage battery unit 12 matches the voltage applied across the new storage battery unit 12. At the determined timing at which the voltage applied across the existing storage battery unit 12 matches the voltage applied across the new storage battery unit 12, the BMU 130 switches the contactor 122 from the off state to the on state.

The BMUs 130-1,..., 130-m are connected to the system controller 32 via the communications lines 12B-1,..., 12B-m, and the communications connectors 132-1,...,132-m. In the explanations below, the communications line is recited as "the communications line 12B" when not to be distinguished with the other communications line. Moreover, in the explanations below, the communications connector is recited as "the communication connector 132" when not to be distinguished with the communications connector.

The communications line 12B and the communications connector 132 are connected to the BMU 130 on a fixed basis. The communications connector 132 is connected to a communications line 1C by the operator at the time of getting attached the storage battery unit 12. This causes the BMU 130 to be communicative with the system controller 32 via the communications line 12B, the communications connector 132, and the communications line 1C. Moreover, the communications connector 132 has the connection with the communications line 1C released by the operator at the time of getting demounted the storage battery unit 12.

Moreover, the BMU 130 is connected to the drive power supply 14 via the drive power line (not shown). The BMU 130 is connected to the drive power line by the operator at the time of getting mounted the storage battery unit 12. This makes it possible for the BMU 130 to control the contactor 122. Moreover, the BMU 130 has the connection with a drive power line released by the operator at the time of getting demounted the storage battery unit 12.

Below, an operation for the case of getting mounted another storage battery unit 12 (the new storage battery unit 12) to the storage battery unit 12 (the existing storage battery unit 12) in the storage battery system 1 according to the embodiment is described. FIG. 4 is a flow chart illustrating a processing procedure of the BMU 130 in the storage battery system 1 according to the embodiment.

First, the BMU 130 determines whether the own device as the new storage battery unit 12 has been got attached to the existing storage battery unit 12 (step S100). Then, when the BMU 130 is connected to the drive power line to cause the drive operation power to be supplied and is activated, determination of step S100 is performed. The BMU 130 determines that the own device as the new storage battery unit 12 has been got mounted to the existing storage cell unit 12 when the communications line 12B and the communications connector 132 are connected to the communications line 1C and a permission signal is provided by the system controller 32. The permission signal is a signal which permits a connection to the existing storage battery unit 12 as a new storage battery unit 12, but is not limited to, so that it may be a communications permission signal, etc. The BMU 130 is brought to the wait state when not got mounted as the new storage battery unit 12.

The BMU 130 determines whether the contactor 122 is in the on state when it is determined that it is connected to the existing storage battery unit 12 as the new storage battery unit 12 (step S102). When the contactor 122 is in the on state, the BMU 130 transitions the normal operation. As the normal operation, based on the temperature detected by the CMU and the charge-discharge request received from the system controller 32, the BMU 130 controls the charge-discharge of the storage battery unit 12.

If it is determined that the contactor 122 is not in the on state, the BMU 130 detects the voltage applied across the existing storage battery unit 12 (step S104). Then, the BMU 130 switches the switch 124a to the on state to acquire the current value measured by the current meter 124c. The current value measured by the current meter 124c takes a current value for the current which flows through the resistive body 124b, which is a value corresponding to the difference between the voltage applied across the existing storage battery unit 12 and the voltage applied across the storage battery module 120 in the own storage battery unit 12. The BMU 130 derives the voltage applied across the existing storage battery unit 12 based on the current value measured by the current meter 124c. Then, the BMU 130 derives the voltage applied across the existing storage battery unit 12 based on the voltage applied across the known own storage battery module 120 and the resistance value of the known resistive body 124b, and the current value measured by the current meter 124c.

The BMU 130 switches the switch device 124a to the on state in a period in which the voltage applied across the existing storage battery unit 12 is detected. In other words, unlike a pre-charge resistance which prevents a large inrush current into the storage battery module 120, the resistive body 124b does not have the voltage applied across the existing storage battery unit 12 and the voltage applied across the new storage battery unit 12 matched. The BMU 130 intermittently switches the switch 124a from the off state to the on state. In other words, to measure the current value by the current meter 124c, the BMU 130 switches the switch 124a from the off state to the on state, and the switch 124a from the on state to the off state after measuring the current value.

The period in which the switch 124a is maintained in the on state may be a period in which the current value can be measured, but is not limited to. Moreover, in the BMU 130, the time interval in which the current value is measured may be set to several minutes or several hours, but is not limited to. In this way, the BMU 130 may suppress wasteful power consumed by the resistive body 124b to suppress a decrease in the energy efficiency in the storage battery system 1. Moreover, the BMU 130 may prevent heat generation in the resistive body 124b.

Moreover, the BMU 130 may determine the difference between the voltage applied across the existing storage battery unit and the voltage applied across the new storage battery unit 12, and when the difference is determined to be in a predetermined range, it may determine that the voltage applied across the existing storage battery unit 12 matches the voltage applied across the new storage battery unit 12.

The BMU 130 determines whether the voltage applied across the existing storage battery unit 12 is within a predetermined range (step S106). When the voltage applied across the existing storage battery unit 12 is determined to be within the predetermined range, the BMU 130 turns the contactor 122 to the on state (step S108). When the voltage applied across the existing storage battery unit 12 is not in a predetermined range, the BMU 130 returns the process to step S104. In other words, the BMU 130 places the contactor 122 into a non-conductive state in a case that the BMU 130 determined that the difference exceeds the threshold. The BMU 130 places the contactor 122 into a conductive state in another case that the BMU 130 determined that the difference does not exceed the threshold. The difference is a first voltage applied across the storage battery unit 12 (the existing storage battery unit 12) to which the contactor 122 is connected and a second voltage applied across the other storage battery unit 12 (the new storage battery unit 12) to which the contactor 112 is connected.

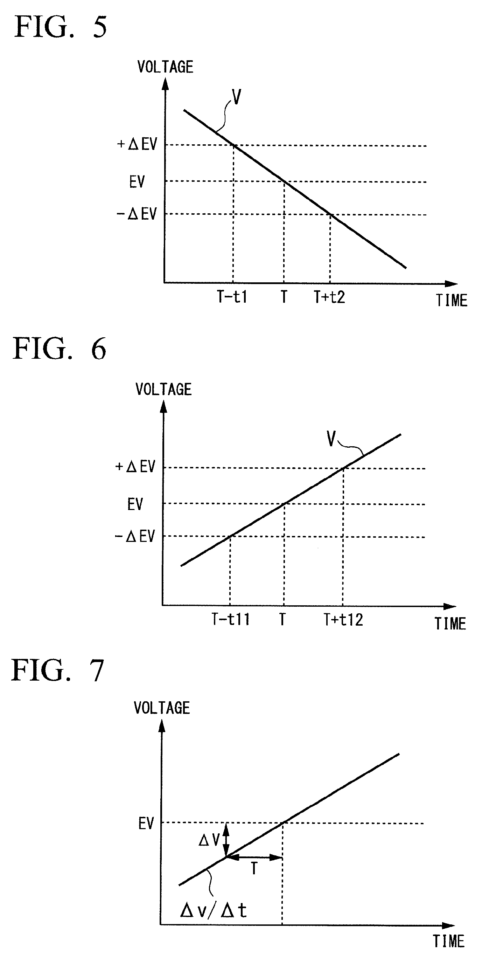

FIG. 5 is a diagram for explaining one example of the timing at which the contactor 122 is turned to the on state in the storage battery system 1 according to the embodiments. FIG. 6 is a diagram for explaining the other example of the timing at which the contactor 122 is turned to the on state in the storage battery system 1 according to the embodiments.

As a voltage within a predetermined range to be compared with the voltage applied across the existing storage battery unit 12, the BMU 130 sets a range with a predetermined width (+Δ EV to -Δ EV) with the EV corresponding to the voltage applied across the new storage battery unit 12 as the center. The EV which corresponds to the voltage applied across the new storage battery unit 12 is the voltage value which corresponds to the average SOC (state of charge) in the storage battery module 120, but is not limited to. Δ EV is an offset width which is allowed with respect to the voltage EV across the new storage battery unit 12. Δ EV is determined based on the current value which is allowed to flow through the contactor 122 when the contactor 122 is turned to the on state.

As shown in FIG. 5, when the voltage V across the existing storage battery unit 12 is higher than the voltage EV across the new storage battery unit 12, the BMU 130 waits until the voltage V of the existing storage battery unit 12 decreases below the voltage (+Δ EV). The voltage V across the existing storage battery unit 12 drops due to power discharged from the existing storage battery unit 12. If the voltage V across the existing storage battery unit 12 decreases below the voltage (+Δ EV), the BMU 130 controls the contactor 122 to be in the on state. In this way, the BMU 130 may control the contactor 122 to the on state at the timing of the period (T-t1 to T+t2) in which the voltage V across the existing storage battery unit 12 turns from + Δ EV to -Δ EV.

As shown in FIG. 6, when the voltage V across the existing storage battery unit 12 is lower than the voltage EV across the new storage battery unit 12, the BMU 130 waits until the voltage V across the existing storage battery unit 12 increases above the voltage (- Δ EV). The voltage V across the existing storage battery unit 12 increases by power being charged to the existing storage battery unit 12. When the voltage V across the existing storage battery unit 12 increases above the voltage (- Δ EV), the BMU 130 controls the contactor 122 to the on state. In this way, the BMU 130 may control the contactor 122 to the on state at the timing of the period (T+t12 to T-t11) in which the voltage V across the existing storage battery unit 12 turns from - Δ EV to + Δ EV.

Moreover, when the voltage V across the existing storage battery unit 12 is brought to be equal to the voltage EV across the new storage battery unit 12, the BMU 130 may turn the contactor 122 to the on state. In this way, even when the operation delay of the contactor 122 is taken into account, the BMU 130 may control the contactor 122 to be in the on state in a period in which the voltage V across the existing storage battery unit 12 is brought from EV to + Δ EV or - Δ EV.

Furthermore, based on the differential value of the voltage V across the existing storage battery unit 12, the BMU 130 may project the time up to which the voltage V across the existing storage battery unit 12 reaches the voltage EV across the new storage battery unit 12 to control the timing to switch the contactor 122 to the on state. FIG. 7 is a diagram for explaining the other one example of the timing at which the contactor 122 is turned to the on state in the storage battery system 1 according to the embodiment. Based on the change in the current value measured by the current meter 124c, the BMU 130 calculates a difference ΔV between the voltage V across the existing storage battery unit 12 and the voltage EV across the new storage battery unit 12 and a differential value Δv/Δt of the voltage V across the existing storage battery unit 12. The BMU 130 calculates a period T in which the voltage applied across the existing storage battery unit 12 is brought to be equal to the voltage EV across the new storage battery unit 12 based on the difference ΔV and the differential value Δv/Δt, and switches the contactor 122 to the on state at the timing at which the period T elapses.

Moreover, when the differential value of the voltage V across the existing storage battery unit 12 is higher than a predetermined value, the BMU 130 may prevent the contactor 122 from being turned to the on state even when the voltage V across the existing storage battery unit 12 is within a predetermined range.

As described above, while the process of turning the contactor 122 to the on state is executed by the BMU 130, the BMU 130 and the system controller 32 may conduct communications to execute control in which the system controller 32 brings the contactor 122 to the on state.

As described above, according to the storage battery system 1 according to the embodiment, when the new storage battery unit 12 is connected to the existing storage battery unit 12, the contactor 122 is controlled to be in the on state when the voltage applied across the existing storage battery unit 12 matches the voltage applied across the new storage battery unit 12. In other words, the BMU 130 places the contactor 122 into a conductive state when the BMU 130 determined that the difference a first voltage applied across the existing storage battery unit 12 and a second voltage applied across the new storage battery unit 12 does not exceed the threshold. The threshold may be, but is not limited to, EV as shown FIGs 5 and 6 or the predetermined range (from EV to + Δ EV). According to the storage battery system 1 of the embodiment, this makes it possible to avoid a large inrush current from flowing even when the contactor 122 is turned to the on state. As a result, the pre-charge resistance or the charge device for matching the voltage applied across the new storage battery unit 12 to the voltage applied across the existing storage battery unit 12 is not necessary, making it possible to simplify the device. Moreover, the storage battery system 1 according to the embodiment may cause the new storage battery unit 12 to be connected to the existing storage battery unit 12 in an inexpensive and secure manner.

Moreover, according to the storage battery system 1 of the embodiment, it is not necessary to match the voltage applied across the new storage battery unit 12 to the voltage applied across the existing storage battery unit 12 when the new storage battery unit 12 is connected to the existing storage battery unit 12. In this way, the storage battery system 1 of the embodiment may suppress the wait time for matching both voltages thereacross, making it possible to shorten the wait time up to the new storage battery unit 12 activating. For example, for a system in which power storage is greater than power usage, the breadth in charge-discharge is large, and the charge-discharge is repeated, the wait time for the new storage battery unit 12 may be shortened.

Furthermore, the storage battery system 1 of the embodiment makes it possible to cause the new storage battery unit 12 as a corrective maintenance part of the storage battery system 1 to be connected to the existing storage battery unit 12 without stopping the operation of the existing storage battery unit 12 to prevent a large inrush current from flowing through the existing storage battery unit 12. As a result, the storage battery system 1 of the embodiment makes it possible to improve the convenience and the reliability as a system.

The at least one embodiment described in the foregoing has the plurality of storage battery units 12 connected in parallel to each other, each of the storage battery units 12 including the storage battery module 120; the detector 124 configured to detect a voltage applied across the storage battery module; the contactor 122 connected between the storage battery module 120 and another storage battery module 120 that is included in another storage battery unit 12 of the plurality of storage battery units 12; and BMU 130 configured to control conductivity of the contactor 122, the BMU 130 configured to determine whether there is a difference, which exceeds a threshold, between a first voltage applied across the storage battery unit 12 to which the contactor 122 is connected and a second voltage applied across the other storage battery unit 12 to which the contactor is connected, the BMU 130 being configured to place the contactor 122 into a non-conductive state in a case that the BMU 130 determined that the difference exceeds the threshold, and the BMU 130 being configured to place the contactor 122 into a conductive state in another case that the BMU 130 determined that the difference does not exceed the threshold to make it possible to simplify the device without the need to include the feature for matching the voltage applied across the new storage battery unit 12 to the voltage applied across the existing storage battery unit 12.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the scope of the present inventions. The accompanying claims and their equivalents are intended to cover such forms or modifications as would fall within the scope and spirit of the inventions.

## Claims

1. A storage battery system, comprising:
a plurality of storage battery units connected in parallel to each other, each of the storage battery units comprising:
a storage battery module;
a detector configured to detect a voltage applied across the storage battery module;
a contactor connected between the storage battery module and another storage battery module that is included in another storage battery unit of the plurality of storage battery units; and
a controller configured to control conductivity of the contactor, the controller configured to determine whether there is a difference, which exceeds a threshold, between a first voltage applied across the storage battery unit to which the contactor is connected and a second voltage applied across the other storage battery unit to which the contactor is connected, the controller being configured to place the contactor into a non-conductive state in a case that the controller determined that the difference exceeds the threshold, and the controller being configured to place the contactor into a conductive state in another case that the controller determined that the difference does not exceed the threshold.

2. The storage battery system according to claim 1,
wherein the contactor is connected to a high voltage and low voltage lines that are connected to the storage battery unit without a resistive body for inrush power suppression intermediating between the contactor and the high voltage and low voltage lines.

3. The storage battery system according to claim 1 or 2,
wherein the detector includes
a resistive body for current detection that is provided in a power line which connects the storage battery unit and the other storage battery unit; and
a current detector which is connected in series with the resistive body for the current detection; and
wherein the controller is further configured to determine whether there is a difference between the first voltage applied across the storage battery unit and the second voltage applied across the other storage battery unit based on a current value detected by the current detector and determine that there is a match between the first voltage applied across the storage battery unit and the second voltage applied across the other storage battery unit in a case that the difference is within a predetermined range.

4. The storage battery system according to any one of claim 1 to claim 3,
wherein the controller is further configured to determine that the other storage battery unit is got attached to the storage battery unit in a case that operating power is supplied from a power supply device and cause the detector to detect the first voltage applied across the storage battery.

5. A storage battery unit, comprising:
a storage battery module;
a contactor connected the storage battery module in serial,
a detector configured to detect a voltage applied across the storage battery module;
a controller configured to control conductivity of the contactor, the controller configured to determine whether there is a difference, which exceeds a threshold, between a first voltage applied across the storage battery unit to which the contactor is connected and a second voltage applied across the other storage battery unit to which the contactor is connected, the controller being configured to place the contactor into a non-conductive state in a case that the controller determined that the difference exceeds the threshold, and the controller being configured to place the contactor into a conductive state in another case that the controller determined that the difference does not exceed the threshold.

6. A computer program product which,
in a case that an another storage battery unit which includes a contactor and a storage battery module that are serially connected is got attached in parallel with a storage battery unit, causes a computer to:
acquire a voltage applied across the storage battery unit;
determine whether there is a difference, which exceeds a threshold, between a first voltage applied across the storage battery unit to which the contactor is connected and a second voltage applied across the other storage battery unit to which the contactor is connected;
place the contactor into a conductive state in a case that the difference does not exceeds the threshold.
